Europäisches Patentamt

European Patent Office

Office européen des brevets

(19)

(11) Numéro de publication : **0 449 675 A1**

(12)

# DEMANDE DE BREVET EUROPEEN

(21) Numéro de dépôt : **91400479.1**

(22) Date de dépôt : **21.02.91**

(51) Int. Cl.⁵ : **A23L 1/05, A23L 1/0562, A23L 1/31, A23J 3/26**

(30) Priorité : **21.02.90 FR 9002146**

(43) Date de publication de la demande :
**02.10.91 Bulletin 91/40**

(84) Etats contractants désignés :
**BE DE ES IT**

(71) Demandeur : **FROMAGERIES BEL**
**4, rue d'Anjou**
**F-75008 Paris (FR)**

(72) Inventeur : **Combeaud,Pierre**
**10 rue Louis Lambert Navell**
**F-41100 Vendome (FR)**

(74) Mandataire : **Le Guen, Gérard et al**
**CABINET LAVOIX 2, place d'Estienne d'Orves**
**F-75441 Paris Cédex 09 (FR)**

(54) Nouveau liant alimentaire, procédé d'obtention, produit alimentaire le comprenant.

(57)    L'invention a pour objet un liant protéique destiné à l'industrie alimentaire comprenant au moins deux composants protéiques d'origine différente, caractérisé en ce qu'il est obtenu par cuisson-extrusion de ses composants.
    Le liant protéique est avantageusement utilisé dans l'industrie de la charcuterie.

EP 0 449 675 A1

## NOUVEAU LIANT ALIMENTAIRE, PROCEDE D'OBTENTION, PRODUIT ALIMENTAIRE LE COMPRENANT

La présente invention se rapporte à l'industrie alimentaire et concerne plus particulièrement un liant protéique destiné à l'industrie alimentaire et plus particulièrement à l'industrie de la charcuterie et des produits carnés.

On désigne sous le nom de "liant" tout produit ou mélange de produits alimentaires employé à des doses comprises entre 1 à 10% par rapport au produit fini, susceptible d'augmenter la cohésion ou de retarder la séparation en cours de fabrication des divers constituants d'une même préparation. Les liants agissent en général d'une façon plus ou moins complexe soit par gélification, soit par coagulation, soit par absorption d'eau, soit par leurs propriétés émulsifiantes ou par l'addition de ces diverses propriétés.

Les principaux liants habituellement utilisés dans l'industrie alimentaire sont choisis dans les groupes composés des gélatines, des protéines d'oeuf, du plasma sanguin, de matières amylacées (amidons, farines diverses, etc...), des polysaccharides, des hydrocolloïdes (alginates, carraghénates), des protéines laitières (caséines, caséinates, protéines de sérum, co-précipités, etc..).

Selon l'utilisation finale et les propriétés que l'on souhaite obtenir l'on utilise soit un des composants ci-dessus pris isolément, soit plus souvent un mélange de deux ou plusieurs de ces composants. Ainsi, en charcuterie selon la texture du produit final que l'on veut obtenir, (produit à texture ferme et tranchable pour des pâtes et saucisses ou produits à texture souple susceptibles d'être tartinés comme les mousses), on choisira le ou les composants en fonction des qualités de texture requises.

Le fabricant du produit utilisera donc le liant approprié qui sera choisi dans le groupe des composants ci-dessus mentionnés. A cet égard, les protéines laitières par leurs propriétés émulsifiantes et de rétention d'eau sont avantageusement utilisées comme liant dans les produits alimentaires notamment les produits de charcuterie. Un avantage important de leur utilisation réside également dans leur grande valeur nutritionnelle.

Toutefois, leur coût élevé par rapport aux autres composants utilisés à cet usage et leur disponibilité aléatoire sur le marché, oblige les utilisateurs à trouver des succédanés ou à les utiliser en mélange avec d'autres protéines; pour l'utilisateur final, il est toutefois indispensable de trouver des mélanges ou des succédanés dont les propriétés fonctionnelles et technologiques se rapprochent le plus possible de celles des protéines laitières.

A cet égard, il existe déjà sur le marché de tels mélanges, notamment des mélanges de protéines animales dont de préférence des protéines laitières provenant d'organismes unicellulaires ou protéines microbiennes et des protéines végétales.

A ce jour, les mélanges sont réalisés, soit par l'utilisateur final, soit par le fournisseur de ces liants; dans ce dernier cas, les mélanges sont réalisés selon deux techniques :

– celle du co-séchage qui consiste en un séchage des constituants à l'état ou liquide ou concentré par tout moyen de séchage connu et approprié tel que l'atomisation...

– celle du co-mélange qui consiste à mélanger les constituants à l'état sec ou pulvérulent.

La nature des constituants du mélange est déterminée en fonction des prix des matières premières, de leur disponibilité et de l'usage final du liant. Toutefois, les mélanges obtenus par ces deux techniques de préparation ne donnent pas entièrement satisfaction car le simple mélange des composants avant ou après séchage n'entraîne pas la formation de liaisons entres composants du simple mélange susceptibles d'exacerber leurs propriétés originelles et d'obtenir une synergie de leurs propriétés, voire d'en créer de nouvelles.

Le but de la présente invention est, par conséquent, de fournir un liant protéique sous forme d'un mélange de protéines d'origines diverses qui ait des propriétés technologiques et fonctionnelles supérieures à celles des composants pris isolément ou en mélange et évite ainsi les inconvénients de l'état de la technique.

Ce but est atteint grâce au nouveau liant protéique préparé selon la présente invention constitué d'un mélange de protéines d'origines diverses, dont les propriétés fonctionnelles et technologiques sont de manière surporenante supérieures à celles obtenues pour des mélanges identiques réalisés par les voies traditionnelles de co-mélange et de co-séchage.

Le mélange, selon l'invention, est obtenu par l'utilisation d'une technique spécifique adaptée et capable d'exacerber les propriétés originelles des matières premières mises en oeuvre; elle consiste à réaliser une cuisson-extrusion des composants du mélange. Cette cuisson-extrusion se fera de préférence en présence d'un alcali.

Un autre avantage du traitement de cuisson-extrusion réside en la possibilité selon le choix des températures appliquées au moment du traitement de décontaminer le produit, décontamination qu'il n'est pas possible d'obtenir par les moyens connus de l'état de la technique.

Cette technique est utilisée en confiserie pour la fabrication de chocolat et de réglisse, dans le domaine céréalier (pour la fabrication de céréales du petit-déjeuner), en amidonnerie (amidons, adjuvants de boulangerie), en alimentation animale et dans l'industrie laitière (fabrication de caséinates et de fromage fondu); elle est également utilisée dans l'industrie alimentaire pour la fabrication de protéines texturées; dans ce dernier cas elle a pour but, non de conférer aux protéines traitées des propriétés fonctionnelles et technologiques comme par exemple l'aptitude à la rétention d'eau et de gras ou celle d'émulsion comme dans l'invention, mais de réaliser le filage de protéines naturellement présentes sous forme globulaire pour leur conférer des textures fibrillaires et réaliser ainsi des succédanés de viande; un exemple connu consiste à traiter de cette sorte les protéines de soja pour en faire des succédanés de "viande" de structures fibrillaires.

Toutefois, cette technique n'a jamais été utilisée pour conférer à des mélanges protéiques des propriétés fonctionnelles et technologiques de liaison d'eau et de gras nécessaire à l'obtention d'un liant protéique selon l'invention.

En outre, il était tout à fait inattendu qu'en mettant en oeuvre cette technique, on obtienne un liant protéique ayant des propriétés très supérieures à celles obtenues avec les techniques traditionnelles connues.

Ainsi, l'objet de la présente invention consiste en un liant protéique destiné à l'industrie alimentaire comprenant au moins deux composants protéiques d'origine différente, caractérisé en ce qu'il est obtenu par cuisson-extrusion de ses composants.

De préférence, le liant protéique selon l'invention est obtenu par cuisson-extrusion selon les conditions opératoires suivantes :
- extrait sec des composants introduits dans le cuiseur-extrudeur compris entre 70% et 90%,
- température d'entrée de l'extrudeur comprise entre 20 et 25°C,
- température de sortie de l'extrudeur comprise entre 50 et 150°C,
- temps de séjour compris entre 2 et 10 secondes et,
- pression comprise entre $80.10^5$ et $150.10^5$ Pa.

Par liant protéique, on entend un liant composé d'au moins 60% de protéines, d'autres composés tels que glucides, lipides, sels minéraux, vitamines, etc... peuvent par ailleurs être présents dans des proportions pouvant aller jusqu'à 40% en poids total du liant.

Les composants protéiques du liant protéique selon l'invention peuvent avantageusement consister en un mélange binaire de protéines de deux origines différentes, les protéines de chaque origine étant présentes à raison d'au moins 10% en poids du mélange.

Un mélange binaire particulièrement performant comprendra de façon préférentielle au moins une protéine d'origine laitière en mélange avec au moins une protéine d'une autre origine : protéine d'organismes unicellulaires, autre protéine animale ou protéine d'origine végétale.

Les composés protéiques du liant protéique selon l'invention peuvent également consister en un mélange ternaire de protéines d'origine animale, de protéines d'origine unicellulaire et de protéines d'origine végétale, les protéines de chaque origine étant présentes dans le mélange à raison d'au moins 10% en poids du mélange.

Un mélange ternaire particulièrement performant comprendra de façon préférentielle comme protéines animales au moins une protéine d'origine laitière.

Les composés protéiques peuvent en outre consister avantageusement en un mélange quaternaire de protéines laitières, de protéines d'origine animale non laitière, de protéines d'origine végétale et de protéines d'origine unicellaire, les protéines de chaque origine étant présentes dans le mélange à raison d'au moins 10% en poids du mélange.

De façon avantageuse mais non obligatoire, pour tous les mélanges comprenant une protéine d'origine laitière, les propriétés fonctionnelles et technologiques optimales seront obtenues par l'incorporation d'une quantité de cette protéine au moins égale à 20%.

La protéine laitière est choisie, de préférence, dans le groupe des caséines obtenues par tout mode de précipitation actuellement connu (précipitation à l'acide, à la présure, échanges d'ions, fermentation lactique, etc..) et/ou des caséinates obtenus par solubilisation de la caséine par tout alcali habituellement utilisé (sels de sodium, calcium, potassium, etc...), des protéines de sérum, de co-précipités de lait, des mélanges de ces diverses protéines. Du lait écrémé ou du babeurre en l'état ou en poudre pourront également être utilisés ou tout autre concentré protéique d'origine laitière (tels que des concentrés ultrafiltrés, etc....).

Les autres protéines viendront de différentes sources, et seront choisies dans le groupe des protéines d'organismes unicellulaires, des protéines animales autres que les protéines d'origine laitière et des protéines végétales.

Dans le groupe des protéines d'organismes unicellulaires, on pourra utiliser toute protéine issue de n'importe quel organisme unicellulaire mais on choisira de préférence les levures lactiques; ces dernières sont obtenues par la transformation du lactose du lait par voie fermentaire à l'aide de souches microbiennes appropriées, par exemple <u>Kluyveromyces lactis</u> ou <u>fragilis</u> et se caractérisent par leur excellente valeur nutritionnelle (richesse en protéines et en vitamines du groupe B en particulier) et une excellente répartition des acides aminés.

Les protéines d'organismes unicellulaires sont, de préférence, incorporées sous la forme de cellules entières.

Les protéines d'origine animale autre que laitière sont avantageusement choisies dans le groupe des gélatines et des protéines de poisson, de sang ou d'oeuf. Les protéines d'origine végétale sont avantageusement choisis parmi les protéines de soja, de blé, de feverole et de pois.

L'invention a également pour objet un procédé de préparation d'un liant protéique destiné à l'industrie alimentaire et comprenant au moins deux composants protéiques d'origine différente, caractérisé en ce que l'on réalise d'une cuisson-extrusion des composants constituant le liant protéique.

L'étape de cuisson-extrusion se fait de préférence en présence d'un alcali choisi dans le groupe des sels alcalins ou alcalino-terreux seuls ou en mélange.

Le procédé selon l'invention est mis en oeuvre dans un cuiseur-extrudeur qui est un réacteur chimique où se succèdent les opérations d'alimentation des matières premières de compression et de dégazage, de fusion ou étape de préparation proprement dite et où agissent des paramètres mécaniques et thermiques (pression, température, débit d'entrée, vitesse de rotation des vis) sur lesquels le technicien va agir pour aboutir au produit désiré en fonction des matières premières utilisées.

Dans le cas présent, le liant selon l'invention est obtenu, de préférence, par la succession des opérations suivantes :

a) mélange à sec des constituants de base sous forme de poudre selon les proportions désirées,

b) mise du mélange dans l'appareil de cuisson-extrusion en présence éventuelle d'un alcali de neutralisation à raison de 1 à 6% et de préférence de 1,5 à 3,5% du mélange et éventuellement addition d'eau pour obtenir un extrait sec du mélange compris entre 75 et 90%,

c) passage du mélange dans les conditions opératoires suivantes :

– température d'entrée : 20°C à 25°C,

– temps de séjour dans l'appareil : 2 à 10 secondes

– pression comprise ente $50.10^5$ Pa et $150.10^5$ Pa

– température de sortie : 50 à 150°C, de préférence 80 à 110°C

d) post-traitement du mélange à la sortie du cuiseur-extrudeur de façon à obtenir une granulométrie comprise entre 100 et 200 μm et une humidité résiduelle comprise entre 2 et 8%;

Pour l'opération de granulation, toute technique de broyage peut être utilisée : broyage seul ou broyage-séchage.

La préparation du liant est effectuée de préférence avec un cuiseur-extrudeur bi-vis avec une vitesse de rotation des vis de 200 à 300 t/min, tout broyeur-extrudeur bi-vis disponible actuellement sur le marché pouvant convenir; on peut citer à titre d'exemple le cuiseur-extrudeur bi-vis commercialisé par la Société CLEXTRAL.

Après neutralisation, le pH du liant sera avantageusement compris entre 6,5 et 9,5 et de préférence entre 7,5 et 8,5.

On a, en outre, découvert de manière tout à fait surprenante que l'emploi de sels de Ca ou d'un mélange de sels de calcium et de sodium par rapport aux seuls sels de sodium habituellement utilisés améliorait de manière significative les propriétés du liant selon l'invention et, en particulier, la fermeté des émulsions obtenues par mise en oeuvre de ces liants.

Un alcali de neutralisation tout particulièrement préféré consiste en un mélange de $CaOH_2/Na_2CO_3$ dans les proportions de 1/3 à 3/1.

L'invention a également jour objet un produit alimentaire, de préférence un produit de charcuterie comprenant un liant protéique selon l'invention à une concentration comprise ente 1 et 10%.

Par rapport aux liants traditionnels, le nouveau liant obtenu possède des propriétés technologiques et fonctionnelles nettement supérieures aux propriétés des mélanges obtenus par voies de mélange traditionnelles comme le montre clairement les exemples suivants qui sont donnés à titre d'illustration et non de limitation et vont permettre à l'homme du métier d'apprécier tous les avantages de ces nouveaux liants.

Les pourcentages sont exprimés en poids, sauf indications contraires.

## EXEMPLE 1

On a préparé un nouveau liant selon l'invention à base de caséine-acide, de levure lactique et de concentrats de soja dans les proportions suivantes :

– caséine acide : 20

– concentrat de soja : 50

– levure lactique (cellules entières) : 30

La composition du mélange est la suivante :

– protéines : 66,31

– cendres : 6,23

– glucides : 15,7

– matière grasse : 2,5

– eau : 6,76

Ces trois composants ont été mélangés sous forme de poudre en présence de carbonate de sodium (1,9%) dans un cuiseur-extrudeur bi-vis de la Société CLEXTRAL selon les conditions opératoires suivantes :

– addition d'une quantité d'eau sufisante pour obtenir un extrait sec de 85%

– température d'entrée : 20°C

– température de sortie : 110°C

– temps de séjour : 5 secondes

– pression : $10^7$ Pa

Le produit ($A_1$) obtenu à la sortie de l'extrudeuse est passé dans un broyeur-sécheur afin d'obtenir une poudre ayant une granulométrie de 120 μm, le pH du produit est de 8.

Ce liant est testé dans une émulsion charcutière-modèle ($A'_1$) stérilisée à 115°C de formulation suivante :

– 1 part de liant

– 7 parts d'eau

– 7 parts de matière grasse.

Parallèlement, on a préparé des liants de composition similaire par la technique du co-séchage (produit $B_1$) et celle du co-mélange à sec (produit $C_1$); on a également réalisé avec ces deux types de liants des émulsions-modèles charcutières comparatives ($B'_1$) et ($C'_1$) de même composition que celle réalisée avec le liant protéique obtenu selon l'invention.

On a comparé les propriétés des trois liants $A_1$, $B_1$ et $C_1$ et des trois émulsions $A'_1$, $B'_1$, $C'_1$.

### 1) Observation de la structure

Les émulsions $A'_1$, $B'_1$ et $C'_1$ ont été observées au microscope électronique avec un grossissement de 10 000.

Les clichés obtenus sont présentés respectivement sur les Figure: 1, 2 et 3.

Ces clichés montrent clairement la différence entre les différentes émulsions obtenues.

Dans le cas de l'émulsion $A'_1$, réalisée avec le liant selon l'invention ($A_1$), les cellules de levure montrent une expulsion de leur contenu protéique à même de former des liaisons avec les autres protéines du milieu, notamment la caséine; elles vont ainsi conférer au liant des propriétés fonctionnelles et technologiques supérieures aux propriétés des produits de l'état de la technique.

Une telle structure n'apparaît pas dans les clichés microscopiques des émulsions témoins préparées à partir de liants de composition identique obtenus par co-séchage ou co-mélange ($B_1$ et $C_1$); dans ces derniers cas les cellules de levure sont intactes ou pratiquement intactes et ne permettront donc pas de création de liaisons inter-protéines.

Cette différence de structure explique également la différence des propriétés fonctionnelles et technologiques observées.

### 2) Comparaison des propriétés fonctionnelles des liants $A_1$, $B_1$, $C_1$

Similairement, on a effectué des mesures comparatives de $A_1$, $B_1$ et $C_1$ en ce qui concerne leurs propriétés fonctionnelles exprimées en terme de solubilité protéique, viscosités des solutions protéiques à température ambiante et après chauffage, cinétique de viscosité, propriétés émulsifiantes et les propriétés technologiques des émulsions-modèles charcutières stérilisées $A'_1$, $B'_1$, $C'_1$ exprimées en terme de pénétrométrie et aspect de l'émulsion.

### A) Comparaison de la solubilité des liants $A_1$, $B_1$, $C_1$

On dose dans les liants protéiques le pourcentage de protéines solubles des surnageants de centrifugation d'une solution à 1% de protéines par la méthode "Kjeldahl".

Les résultats indiquent une solubilité nettement supérieure pour $A_1$ par rapport à $B_1$ et $C_1$.

### B) Viscosité des liants $A_1$, $B_1$, $C_1$ en solution à 12% d'extrait sec

La mesure est effectuée à 20°C avant et après chauffage à 70°C pendant 15 minutes pour une seule vitesse de cisaillement (75 t/min) dans un viscomètre TV (Firme EPRECHT).

5

Les résultats sont les suivants :
– rapport des viscosités à 20°C (avant chauffage)
* viscosité $A_1/B_1 = 8,5$
* viscosité $A_1/C_1 = 50$
– rapport des viscosités à 20°C (après chauffage)
* viscosité $A_1/B_1 = 7,5$
* viscosité $A_1/C_1 = 38$

C) Cinétique de viscosité

La cinétique de viscosité est mesurée sur une solution de liant à 15% d'extrait sec sur des produits traités dans les conditions suivantes (pour une vitesse de cisaillement constante 75 /min) :
– montée en température : 25 à 95°C (1,5° C/min),
– maintien de la température pendant 5 minutes à 95°C,
– diminution jusqu'à 25°C (1,5° C/min).
Les résultats comparatifs entre $A_1$, $B_1$ et $C_1$ sont présentés sur les diagrammes de la Figure 4. On observe une légère diminution de la viscosité du produit $A_1$ au chauffage, une stabilisation de la viscosité à partir de 65°C (75-80 m Pa.s) et une forte reprise de la viscosité au refroidissement notamment supérieure à la reprise de viscosité observée pour $B_1$ et $C_1$.
En fin de cycle de refroidissement, les résultats sont les suivants exprimés en terme de rapport de restructuration à froid :
– viscosité $A_1/B_1 = 1,75$
– viscosité $A_1/B_1 = 7,64$
Cette plus forte reprise de viscosité au refroidissement du produit $A_1$ s'explique certainement par une repolymérisation des protéines due à des liaisons établies entre les diverses protéines à la suite du traitement de cuisson-extrusion.

D) Propriétés émulsifiantes mesurées en terme de capacité d'émulsion et de stabilité d'émulsion sur $A_1$, $B_1$, $C_1$.

1. La capacité d'émulsion se mesure en volume d'huile nécessaire pour atteindre le point de rupture d'une émulsion aérée grâce au pouvoir tensioactif du liant protéique en solution aqueuse, la concentration de ce dernier étant très faible de manière à éliminer le facteur viscosité de la phase aqueuse dans le processus de stabilisation d'émulsion.
Dans le cas présent, on prépare une solution à 0,56% de protéines et on incorpore de l'huile colorée à débit constant; on arrête l'incorporation d'huile dès la rupture de l'émulsion qui se manifeste par l'apparition de marbrures vertes foncées dans l'émulsion, on note le volume d'huile ajoutée jusqu'à la rupture.
Les résulats sont exprimées dans le tableau 1 en ml d'huile incorporée dans les conditions du test et en ml d'huile par g d'extrait sec (ES) et par gramme de protéines (MAT).

## TABLEAU 1

## Capacités d'émulsions (à 0,5% de protéines et à pH initial 8)

| Produits | pH de la de la phase aqueuse | ml d'huile ajoutés | temps de rupture | ml d'huile/ g ES | ml d'huile/ g MAT |
|---|---|---|---|---|---|
| $A_1$ | 8,31 | 110 | 2 mn 24 s | 65,45 | 90,65 |
| $B_1$ | 8,00 | 85 | 2 mn 02 s | 49,55 | 70,92 |
| $C_1$ | 7,12 | 75 | 1 mn 49 s | 44,28 | 62,49 |

2. Stabilité d'émulsion

6

On évalue la stabilité de l'émulsion en suivant le processus de déstabilisation de l'émulsion dans le temps; on apprécie :

– la déstabilisation de la phase grasse (apparition d'une phase huile traduisant une mauvaise capacité émulsifiante)

– la déstabilisation de la phase aqueuse : importance du drainage de l'eau de l'émulsion.

On prépare une solution à 7,5% d'ES (pH 8) par dispersion au mixer du produit à tester et on réalise une émulsion à 55% d'huile et 45% d'eau. L'émulsion est effectuée par passage pendant 1 minute dans un broyeur colloïdal; on prélève 2 x 40 g d'émulsion que l'on centrifuge (3000 t/min) et on examine la déstabilisation au cours du temps (1 h et 24 h).

Le volume des différentes phase par rapport au volume initial d'émulsion est exprimé par les hauteurs de chaque phase.

Les résultats obtenus par les liants $A_1$, $B_1$, $C_1$ sont indiqués dans le tableau 2.

<u>TABLEAU 2</u>

<u>stabilité d'émulsion à pH 8 à 7,5% d'ES dans la phase aqueuse</u>

| PRODUITS | TUBES AU REPOS | | | | | | | |
|---|---|---|---|---|---|---|---|---|
| | après 1 heure | | | | après 24 heures | | | |
| | CULOT (%) | H2O (%) | PHASE EMUL. (%) | HUILE (%) | CULOT (%) | H2O (%) | PHASE EMUL. (%) | HUILE (%) |
| $A_1$ | - | - | 100 | - | 2,13 | 0,6 | 97,27 | 0 |
| $B_1$ | 0 | 8,57 | 91,43 | 0 | 3,35 | 0 | 96,65 | 0 |
| $C_1$ | 0 | 14,47 | 85,53 | 0 | 4,20 | 4,54 | 91,26 | 0 |

Les résultats indiquent une meilleure stabilité de l'émulsion obtenue avec $A_1$ par rapport aux émulsions obtenues avec $B_1$ et $C_1$.

E) <u>Propriétés technologiques</u> mesurées sur les émulsions charcutières $A'_1$, $B'_1$, $C'_1$; elles sont évaluées en terme de pénétrométrie et d'aspect d'émulsion.

1. <u>Pénétrométrie</u>

Elle est mesurée sur un appareil INSTRÖN 1140 à 20°C avec les paramètres de mesure étant les suivants :

– sonde cylindrique de diamètre 12,5 mm

– vitesse de pénétrométrie (tête) 50 mm/mn

– consignes pour les points caractéristiques de la courbe de pénétrométrie :

* point 1 25 g X $10^{-2}$ N
* point 2 40 g X $10^{-2}$ N
* point 3 6 mm
* point 4 10 mm
* point 5 15 mm

On calcule la moyenne de 5 grandeurs mesurées par l'appareil.

Les résultats obtenus sur des émulsions non cuites et sur des émulsions stérilisées (115° C pendant 1 h) indiquent la fermeté de l'émulsion mesurée par la force au point 5 et l'élasticité mesurée par la pente de la tangente (départ de la pénétrométrie) exprimée en N/mm; ils sont donnés pour $A_1$, $B_1$, $C_1$ par le tableau 3 ci-dessous.

## TABLEAU 3

| PRODUITS | EMULSIONS NON CUITES | | EMULSIONS STERILISEES | |
|---|---|---|---|---|
| | Cohésion force en $10^{-2}$ N/ au point 5 | Pente de la tangeante en $10^{-2}$ N/mm entre pt 1 et 2 | Cohésion force max en $10^{-2}$ N/ au point 5 | Pente de la tangeante en $10^{-2}$ N/mm entre Pt 1 et 2 |
| A1 moyenne écart type | 151,76 (+ ou – 2,18) | 39,94 (+ ou – 3,35) | 127,00 (+ ou – 3,39) | 26,34 (+ ou – 2,31) |
| B1 moyenne écart type | 116,40 (+ ou – 3,17) | 29,25 (+ ou – 8,32) | 101,5 (+ ou – 4,71) | 25,36 (+ ou – 6,31) |
| C1 moyenne écart type | 74,31 (+ ou – 1,55) | 21,03 (+ ou – 3,79) | 52,68 (+ ou – 1,77) | 10,76 (+ ou – 1,23) |

2 - Aspect de l'émulsion

L'aspect des émulsions obtenues est mesuré sur des émulsions à froid et sur des émulsions stérilisées.

Un jury d'expert a attribué une note aux émulsions à froid et après stérilisation.

Les résultats sont indiqués sur le tableau 4 ci-dessous :

## TABLEAU 4

## Emulsions charcutières (aspect):

| Produits Emulsion Modèle | Emulsion à froid (Travail au cutter) | | | | | Emulsion stérilisée | |
|---|---|---|---|---|---|---|---|
| | pH mêlée | Aspect émulsion | Prise au sel | Observations | Note/5 | Observations | Note/5 |
| A1 | 7,15 | Crème liquide | Bonne prise au sel Crème épaisse Bien lisse | Ferme Sèche Lisse Homogène Souple | 4,25 | Consistante souple Très légèrement brillante | 4,00 |
| B1 | 7,02 | Crème légèrement liquide | Bonne prise au sel Crème moyenne | Ferme Texture un peu arrachée | 3,75 | Texture un peu moins constante et un peu plus arrachée | 3,50 |
| C1 | 6,16 | Liquide | Bonne prise au sel Crème liquide | Peu consistante Texture arrachée | 3,00 | Molle Brillante (léger relargage) de gelée | 2,75 |

EXEMPLE 2

On a préparé un nouveau liant selon l'invention à base d'un mélange binaire de caséine acide et de levure lactique dans des proportions suivantes :

– caséine acide : 70%

– levure lactique (sous forme de cellules entières) 30%

La composition du mélange est la suivante (en %) :

– Eau : 3,5

– MAT : 77,5

- Cendres : 5,9
- Sucres : 11,1
- Matière grasse : 2,5

Les deux composants ont été introduits dans un cuiseur-extrudeur bi-vis de la Société CLEXTRAL en présence d'un sel de sodium, les paramètres opératoires étant les suivants :
- addition d'eau pour obtenir un extrait sec de 88%
- température d'entrée : 22°C
- température de sortie : 150°C
- temps de séjour : 5 secondes
- pression : 1,20 10.$^7$ Pa

Le produit obtenu à la sortie du cuiseur-extrudeur ($A_2$) est passé dans un broyeur afin d'obtenir une poudre ayant une granulométrie de 120 $\mu$m; le pH est de 7,8. Parallèlement, on a fabriqué un liant de composition similaire par les co-séchage (produit $B_2$) et co-mélange (produit $C_2$).

Ces trois liants ont été introduits dans des émulsions-type charcutières avec des proportions suivantes de composés :
- liant : 1
- gras : 7
- eau : 7

nommés respectivement A' $_2$, B' $_2$, C' $_2$.

On a comparé la structure microscopique des émulsions et les propriétés fonctionnelles de $A_2$, $B_2$, $C_2$ exprimées en terme de solubilité des liants, viscosité des solutions protéiques à température ambiante et après chauffage, cinétique de viscosité, capacité de rétention d'eau, propriétés émulsifiantes et en terme de propriétés technologiques exprimés en terme de pénétrométrie et aspect de l'émulsion.

Les résultats obtenus sont le suivants :

## 1) Observation de la structure au microscope optique (grossissement 1125)

Les clichés microscopiques obtenus avec les liants $A_2$, $B_2$ et $C_2$ sont présentés sur la Figure 5. Elles indiquent nettement une différence entre les produits $A_2$ d'une part et, $B_2$ et $C_2$ d'autre part, notamment au niveau de l'aggrégation des cellules de levures qui est meilleure pour le liant de l'invention.

## 2) Comparaison de la solubilité des liants $A_2$, $B_2$ et $C_2$

A/ Solubilité des liants $A_2$, $B_2$ et $C_2$

La solubilité mesurée au pH initial de la poudre (7,8) dans les conditions opératoires précédemment définies à l'Exemple 1, est nettement supérieure pour $A_2$ comparativement à $B_2$ et $C_2$.

B/ Viscosité des liants $A_2$, $B_2$ et $C_2$ mesurée en solution à 12% d'extrait sec sous un cisaillement constant (75 t/min) à 20°C avant et après chauffage à 70°C pendant 15 min.

Dans les conditions opératoires de l'exemple 1, on obtient les résultats suivants :
- rapport des viscosités à 20°C (avant chauffage)
  * viscosité $A_2/B_2 = 4,3$
  * viscosité $A_2/C_2 = 6,8$
- rapport des viscosités à 20°C (après chauffage)
  * viscosité $A_2/B_2 = 2$
  * viscosité $A_2/C_2 = 3,2$

C/ Cinétique de viscosité des liants $A_2$, $B_2$ et $C_2$

Elle est mesurée sur une solution à 15% d'extrait sec sur des produits ayant subi le traitement suivant :
- montée de température : 25 à 95°C (1,5° C/mn)
- maintien pendant 5 minutes à 95°C
- diminution de la température de 95 à 25°C (1,5° C/mn).

Les résultats sont indiqués sur le diagramme de la Figure 6; ils indiquent la tenue exceptionnelle de la viscosité de $A_2$ à température ambiante (440 m Pa.s) et sa remontée dans la phase de refroidissement due à une repolymérisation importante des protéines 1400 m Pa.s). Les diagrammes des produits $B_2$ et $C_2$ ont une allure différente et surtout indiquent une plus faible remontée au refroidissement (500 m Pa.s pour $B_2$, 175 m Pa.s pour $C_2$).

En fin de cycle de refroidissement, les résultats sont les suivants exprimés en terme de rapport de restructuration à froid :

$A_2/B_2 = 2, 8$

$A_2/B_2 = 8$

D/ <u>Propriétés émulsifiantes</u> mesurées en terme de capacité d'émulsion et de stabilité d'émulsion sur $A_2$, $B_2$ et $C_2$

1. <u>Capacité d'émulsion</u>

Le tableau 5 ci-dessous donne les résultats exprimés en ml d'huile ajoutée, temps de rupture de l'émulsion, ml d'huile ajoutée par gramme d'extrait sec et ml d'huile ajoutée par gramme de protéines (matière azotée totale) mesurés selon le conditions de l'exemple 1.

<u>TABLEAU 5</u>

<u>Capacité d'émulsion (à 0,5% de protéines et à pH initial)</u>

| Produits | ph phase aqueuse | ml huile ajouté | Temps de rupture | ml huile gr. ES | ml huile gr. MAT |
|---|---|---|---|---|---|
| $A_2$ | 8,32 | 353 | 7 mn 29 s | 210,24 | 259,20 |
| $B_2$ | 8,13 | 210 | 5 mn (non cassée). | >123,87 | >155,00 |
| $C_2$ | 6,83 | 100 | 2 mn 24 s | 67,92 | 70,29 |

2. <u>Stabilité d'émulsion</u>

Le tableau 6 ci-après donne les résultats obtenus pour A, B et C mesurés dans les conditions de l'exemple 1.

<u>TABLEAU 6</u>

<u>Stabilité d'émulsion (pH initial et 7,5% d'ES)</u>

| PRODUITS | après 1 h | | | | Tubes au repos après 24 h | | | |
|---|---|---|---|---|---|---|---|---|
| | culot | $H_2O$ | phase émuls. | Huile | Culot | $H_2O$ | phase émuls. | Huile |
| $A_2$ | 0 | 3,21 | 96,79 | 0 | 0 | 6,64 | 93,36 | 0 |
| $B_2$ | 0 | 6,20 | 93,80 | 0 | 0 | 15,46 | 82,88 | 1,66 |
| $C_2$ | 0 | 6,45 | 93,55 | 0 | 4,96 | 2,66 | 92,38 | / |

E/ <u>Propriétés technologiques</u> mesurées sur les émulsions $A'_2$, $B'_2$ et $C'_2$

Elles sont évaluées en terme de pénétrométrie et d'aspect d'émulsion.

1. <u>Pénétrométrie</u>

Le tableau 7 ci-après donne les résultats de mesures obtenues avec des émulsions non cuites et des émulsions stérilisées (115° C pendant 1 h) dans les conditions de l'exemple 1.

## TABLEAU 7

### Fermeté et élasticité des émulsions obtenues

| Produits | Emulsions non cuites | | Emulsions stérilisées | |
|---|---|---|---|---|
| | Cohésion. Force maximum au point 5 en $10^{-2}$ N | Pente de la tangeante entre les points 1 et 2 en $10^{-2}$ N/mm | Cohésion. Force maximum au point 5 en $10^{-2}$ N | Pente de la tangeante entre les points 1 et 2 en $10^{-2}$ N/mm |
| $A'_2$ | 81,10 (± 3,69) | 10,02 (± 1,77) | 67,70 (± 1,24) | 6,62 (± 0,39) |
| $B'_2$ | 22,14 (± 1,19) | 0,86 (± 0,07) | 56,42 (± 6,07) | 8,89 (± 1,00) |
| $C'_2$ | 18,01 (± 0,82) | 0 | 22,58 (± 1,27) | 1,34 (± 0,27) |

### 2. Aspect de l'émulsion

L'aspect des émulsions obtenues (travail à chaud + incorporation de sel à 2%) est donné dans le tableau ci-dessous (notes données par un jury d'experts).

## TABLEAU 8

| Produits | Emulsion à froid Travail au cutter | | | OBSERVATIONS | | | |
|---|---|---|---|---|---|---|---|
| | | | | Emulsion à froid | | Emulsion stérilisée | |
| | pH mêlée | Aspect émulsion | Prise au sel | Observations | Note/5 | Observations | Note/5 |
| $A'_2$ | 7,36 | Crème | Bonne prise au sel Crème moyenne | Collante Ferme Compact HV | 3,75 | Souple Homogène Pas de relargage | 3,50 |
| $B'_2$ | 7,16 | Crème légèrement liquide | Bonne prise au sel Crème moyenne | Collante + brillante | 3,5 | Brillante Lisse Fromagère + élastique + collante | 3,25 |
| $C'_2$ | 6,10 | Liquide | Bonne prise au sel Crème liquide | Peu consistante Brillante ++ | 3,25 | Relargage de gelée Molle | 2,5 |

Ces exemples indiquent nettement l'avantage significatif des nouveaux liants obtenus selon l'invention quant à leurs propriétés fonctionnelles et technologiques.

### EXEMPLE 3

L'exemple qui suit donne à titre indicatif et non limitatif les avantages d'utilisation d'un mélange de sels de Na et de Ca sur les propriétés fonctionnelles et technologiques du liant.

L'exemple porte sur un mélange caséine/levure tel que fabriqué dans l'exemple 2; on a comparé pour leurs propriétés fonctionnelles et technologiques des liants obtenus avec introduction dans un cuiseur-extrudeur :

- de sel de Na ($Na_2CO_3$) (produit $A_3$) pH 8,5
- de sel de Ca ($CaOH_2$) (produit $A_4$) pH 6,5
- d'un mélange de sel de Na et Ca (produit $A_6$) pH 8,5 ($CaOH_2$ + $Na_2CO_3$)

On a mesuré dans les mêmes conditions opératoires que celles décrites à l'exemple 1 :

- la solubilité au pH initial de la poudre

– les viscosités en solution à 12% ES et au pH initial de la poudre à 20°C

– la viscosité en solution après traitement thermique à 75°C pendant 20 minutes

– les cinétiques de viscosité

– les propriétés technologiques des émulsions en terme de pénétrométrie et d'aspect d'émulsions-charcutières (A′ $_3$, A′ $_4$, A′ $_5$) réalisées avec A$_3$, A$_4$ et A$_5$ .

1) Solubilité des protéines au pH initial de la poudre :

Les résultats, en % des protéines solubles mesurées dans les conditions de l'exemple 1 sont donnés dans le tableau 9 ci-après.

## TABLEAU 9

### Solubilité en fonction du sel de neutralisation

|   | pH | Solubilité MAT (%) |
|---|---|---|
| A$_3$ | 8,5 | 86,12 |
| A$_4$ | 6,5 | 64,55 |
| A$_5$ | 9,20 | 85,57 |

2) Viscosité de A$_3$, A$_4$ et A$_5$ mesurées à 12% ES et 20°C selon les conditions de l'exemple 1.

## TABLEAU 10

### Viscosité

|   | pH | viscosité à 20°C avant traitement thermique mPa.s | viscosité à 20°C après traitement thermique (170°C 15min) mPa.s |
|---|---|---|---|
| A$_3$ | 8,82 | 112,5 | 57,25 |
| A$_4$ | 6,41 | 40,00 | 24,50 |
| A$_5$ | 9,20 | 900,00 (gélifié) | 7300,00 (gélifié) |

3) Viscosité de A$_3$, A$_4$ et A$_5$ après traitement thermique à 125°C pendant 20 min, mesurées à 20°C sur des produits à 12,5% d'ES.

## TABLEAU 11

### Viscosité

|  | pH | viscosité à 20°C mPa.s | Observations |
|---|---|---|---|
| A$_3$ | 8,5 | 31,5 | Pas de gel, légèrement visqueux. |
| A$_4$ | 6,5 | 132 | Laiteux - floculé |
| A$_5$ | 9,2 | 620 | Gel thixotropique |

4) Cinétique de viscosité : la Figure 7 montre la cinétique de viscosité mesurée dans les conditions de l'exemple 1 et indique une remontée de la viscosité après chauffage plus importante dans le cas du mélange de sels de Na et Ca que dans le cas des sels pris isolément et aboutissant dans le cas du mélange Ca/Na à un gel ferme en fin de cycle de refroidissement.

5) Capacité d'émulsion à pH initial de la poudre à température ambiante pour une solution de 0,5% de protéines, le tableau 12 ci-dessous donne les résultats mesurés dans les conditions de l'exemple 1.

## TABLEAU 12

### Capacité d'émulsion en fonction du sel de neutralisation

|  | pH Phase aqueuse | ml huile ajoutés | temps de rupture | ml huile/ g ES | ml huile/ g MAT |
|---|---|---|---|---|---|
| A$_3$ | 8,32 | 353 | 7 mn 39 s | 210,24 | 259,20 |
| A4 | 6,90 | 80 | 1 mn 56 s | 47,59 | 58,18 |
| A$_5$ | 9,45 | 250 | 6 mn 08 s | 148,86 | 188,78 |

6) Stabilité d'émulsion au pH initial de la poudre pour une solution à 7,5 % ES. Les résultats sont donnés dans le tableau 13 ci-après (conditions de mesure identiques à l'exemple 1)

## TABLEAU 13

### Stabilité d'émulsion en fontion du sel de neutralisation

| PRODUITS | 1 h | Tubes au repos | | | 24 h | | | |
|---|---|---|---|---|---|---|---|---|
| | culot | $H_2O$ | Phase émul. | Huile | Culot | $H_2O$ | Phase émul. | Huile |
| $A_3$ | 0 | - | 100 | - | - | - | 100,00 | - |
| $A_4$ | - | - | 100 | - | 10,37 | 3,59 | 89,63 | - |
| $A_5$ | - | - | 100 | - | 0,58 | 2,90 | 96,52 | |

7) Propriétés technologiques

Elles sont mesurées sur les produits A'$_3$, A'$_4$ et A'$_5$.

7.1 Pénétrométrie mesurée à 20°C avec un appareil INSTRON (selon les conditions opératoires de l'exemple 1)

## TABLEAU 14

| Produits | Emulsions non cuites | | Emulsions stérilisées | |
|---|---|---|---|---|
| | Cohésion. Force maximum au point 5 en $10^{-2}$ N | Pente de la tangeante entre les points 1 et 2 en $10^{-2}$ N/mm | Cohésion. Force maximum au point 5 en $10^{-2}$ N | Pente de la tangeante entre les points 1 et 2 en $10^{-2}$ N/mm |
| $A_3$ moy E.type | 81.10 ($\pm$ 3,69) | 10.02 ($\pm$ 1,77) | 67,70 ($\pm$ 1,24) | 6,62 ($\pm$ 0,39) |
| $A_4$ | 141.8 ($\pm$ 2,94) | 27,01 ($\pm$ 2,87) | 95,47 ($\pm$ 3,91) | 16,50 ($\pm$ 1,84) |
| $A_5$ | 103,5 ($\pm$ 2,58) | 21,09 ($\pm$ 4,16) | 116,1 ($\pm$ 4,16) | 36,89 ($\pm$ 6,20) |

7.2 Aspect de l'émulsion

EP 0 449 675 A1

## TABLEAU 15

| Produits | Emulsion à froid Travail au cutter | | | OBSERVATIONS Emulsion à froid | | Emulsion stérilisée | |
|---|---|---|---|---|---|---|---|
| | pH mêlée | Aspect émulsion | Prise au sel | non cuites | Note/5 | Stérilisées | Note/5 |
| $A_3$ | 7,43 | Liquide | Crème | brillante collante/liée visqueuse | 3,5 | Brillante pas de relargage souple/ homogène crème épais | 3,25 |
| $A_4$ | 6,14 | Crème liquide | Crème épaisse | Ferme Text. un peu arrachée Pas brillante Sèche | 3,75 | Pas de relargage Souple/ homogène | 3,5 |
| $A_5$ | | Crème | Prise instantanée Crème très épaisse | Consistante Ferme/lisse Pas brillante | 4 | Tranchable réactivité forte Ferme émulsion très bonne | 4 |

## Revendications

**1** - Liant protéique destiné à l'industrie alimentaire comprenant au moins deux composants protéiques d'origine différente, caractérisé en ce qu'il est obtenu par cuisson-extrusion de ses composants.

**2** - Liant protéique selon la revendication 1, caractérisé en ce qu'il est obtenu par cuisson-extrusion dans les conditions opératoires suivantes :

– introduction des composants dans le cuiseur-extrudeur avec un extrait sec compris entre 70% et 90%,

– température d'entrée de l'extrudeur comprise entre 20 et 25°C,

– température de sortie de l'extrudeur comprise entre 50 et 150°C,

– temps de séjour compris entre 2 et 10 secondes et,

– pression comprise entre $80.10^5$ et $150.10^5$ Pa.

**3** - Liant protéique selon les revendications 1 ou 2, caractérisé en ce que la cuisson-extrusion des composants du mélange s'effectue en présence d'un alcali.

**4** - Liant protéique selon les revendications 1 ou 2, caractérisé en ce que ses composants protéiques consistent en un mélange binaire de protéines de deux origines différentes, les protéines de chaque origine étant présentes à raison d'au moins 10% en poids du mélange.

**5** - Liant protéique selon la revendication 4, caractérisé en ce que l'un au moins des composants du mélange binaire est une protéine d'origine laitière.

**6** - Liant protéique selon les revendications 1 ou 2, caractérisé en ce que les composants protéiques consistent en un mélange ternaire de protéines d'origine animale, de protéines d'origine unicellulaire et de protéines d'origine végétale, les protéines de chaque origine étant présentes dans le mélange à raison d'au moins 10% en poids du mélange.

**7** - Liant protéique selon la revendication 6, caractérisé en ce que les protéines d'origine animale sont des protéines d'origine laitière.

**8** - Liant protéique selon la revendication 1 ou 2, caractérisé en ce que ses composants protéiques consistent en un mélange quaternaire de protéines laitières, de protéines d'origine animale non laitière, de protéines d'origine végétale et de protéines d'origine unicellaire, les protéines de chaque origine étant présentes dans le mélange à raison d'au moins 10% en poids du mélange.

**9** - Liant protéique selon l'une quelconque des revendications 1 à 5, caractérisé en ce que les protéines laitières sont choisies parmi le groupe des caséines et/ou caséinates, les protéines de sérum de lait, les protéines de co-précipités laitiers, les protéines du babeurre, les protéines de lait écrémé et les protéines de tout autre concentré protéique laitier.

15

**10** - Liant protéique selon les revendications 1 à 8, caractérisé en ce que les protéines d'organismes unicellulaires sont ajoutées sous la forme de cellules entières.

**11** - Liant protéique selon la revendication 10, caractérisé en ce que les protéines d'organismes unicellulaires sont de préférence choisies parmi les protéines de levures lactiques.

**12** - Liant protéique selon l'une quelconque des revendications 1 à 8, caractérisé en ce que les protéines d'origine animale autre que laitière sont choisies dans le groupe des gélatines et des protéines de poisson, du sang ou d'oeuf.

**13** - Liant protéique selon l'une quelconque des revendications 1 à 8, caractérisé en ce que les protéines d'origine végétale sont choisies parmi les protéines de soja, de blé, de feverole et de pois.

**14** - Liant protéique selon l'une quelconque des revendications précédentes, caractérisé en ce que la proportion de protéine(s) laitière(s) est d'au moins 20%.

**15** - Liant selon l'une des revendications 1 à 14, caractérisé en ce qu'il est obtenu par cuisson-extrusion en présence d'un alcali de neutralisation consistant en un sel alcalin, un sel alcalino-terreux ou leur mélange.

**16** - Liant selon la revendication 15, caractérisé en ce que l'alcali de neutralisation consiste en un mélange de $Na_2CO_3$ et $CaOH_2$.

**17** - Procédé de préparation d'un liant protéique destiné à l'industrie alimentaire et comprenant au moins deux composants protéiques d'origine différente, caractérisé en ce que l'on réalise une cuisson-extrusion des composants constituant le liant protéique.

**18** - procédé selon la revendication 17, caractérisé en ce que l'on prépare le liant protéique par les étapes suivantes :

a) mélange des composants de départ sous forme de poudre,

b) introduction du mélange dans un cuiseur-extrudeur avec un extrait sec compris entre 75 et 90% éventuellement en présence d'un alcali, la proportion de l'alcali étant comprise entre 1 et 6% et, de préférence, entre 1,5 et 3,5% par rapport au poids du mélange total,

c) passage du mélange dans le cuiseur-extrudeur, la température d'entrée étant de 20 à 25°C, le temps de séjour de 2 à 10 secondes, la pression de $80.10^5$ à $150.10^5$ Pa et la température de sortie de 50 à 300°C, de préférence de 80 à 150°C,

d) post-traitement du mélange à la sortie du cuiseur-extrudeur pour obtenir une granulométrie comprise entre 100 et 200 μm et une humidité résiduelle comprise entre 2 et 8% en poids par rapport au poids total du liant protéique.

**19** - Procédé selon la revendication 18, caractérisé en ce que l'on utilise un cuiseur-extrudeur bi-vis, la vitesse de rotation des vis étant de 200 à 300 t/min.

**20** - Procédé selon la revendication 18, caractérisé en ce que la quantité de l'alcali de neutralisation ajoutée est telle que le pH soit compris entre 6,5 et 9,5 de préférence entre 7,5 à 8,5.

**21** - Procédé selon la revendication 18, caractérisé en ce que la cuisson-extrusion consiste en outre en une décontamination des composants du mélange.

**22** - Produit alimentaire caractérisé en ce qu'il comprend un liant protéique selon l'une quelconque des revendications 1 à 21 à une concentration comprise entre 1 et 10%.

**23** - Produit alimentaire selon la revendication 22, caractérisé en ce qu'il consiste en un produit issu de l'industrie charcutière.

## Revendications pour l'Etat contractant suivant: ES

**1** - Procédé de préparation d'un liant protéique destiné à l'industrie alimentaire et comprenant au moins deux composants protéiques d'origine différente, caractérisé en ce que l'on réalise une cuisson-extrusion des composants constituant le liant protéique.

**2** - Procédé de préparation selon la revendication 1, caractérisé en ce que l'on introduit les composants dans le cuiseur-extrudeur, avec un extrait sec compris entre 70% et 90%, à une température d'entrée de l'extrudeur comprise entre 20 et 25°C, à une température de sortie de l'extrudeur comprise entre 50 et 150°C, ave un temps de séjour compris entre 2 et 10 secondes et, avec une pression comprise entre $80.10^5$ et $150.10^5$ Pa.

**3** - Procédé selon les revendications 1 ou 2, caractérisé en ce que la cuisson-extrusion des composants du mélange s'effectue en présence d'un alcali.

**4** - Procédé selon les revendications 1 ou 2, caractérisé en ce que les composants protéiques consistent en un mélange binaire de protéines de deux origines différentes, les protéines de chaque origine étant présentes à raison d'au moins 10% en poids du mélange.

**5** - Procédé selon la revendication 4, caractérisé en ce que l'un au moins des composants du mélange binaire est une protéine d'origine laitière.

**6** - Procédé selon les revendications 1 ou 2, caractérisé en ce que les composants protéiques consistent en un mélange ternaire de protéines d'origine animale, de protéines d'origine unicellulaire et de protéines d'origine végétale, les protéines de chaque origine étant présentes dans le mélange à raison d'au moins 10% en poids du mélange.

**7** - Procédé selon la revendication 6, caractérisé en ce que les protéines d'origine animale sont des protéines d'origine laitière.

**8** - Procédé selon la revendication 1 ou 2, caractérisé en ce que les composants protéiques consistent en un mélange quaternaire de protéines laitières, de protéines d'origine animale non laitière, de protéines d'origine végétale et de protéines d'origine unicellaire, les protéines de chaque origine étant présentes dans le mélange à raison d'au moins 10% en poids du mélange.

**9** - Procédé selon l'une quelconque des revendications 1 à 5, caractérisé en ce que les protéines laitières sont choisies parmi le groupe des casélnes et/ou caséinates, les protéines de sérum de lait, les protéines de co-précipités laitiers, les protéines du babeurre, les protéines de lait écrémé et les protéines de tout autre concentré protéique laitier.

**10** - Procédé selon les revendications 1 à 8, caractérisé en ce que les protéines d'organismes unicellulaires sont ajoutées sous la forme de cellules entières.

**11** - Procédé selon la revendication 10, caractérisé en ce que les protéines d'organismes unicellulaires sont de préférence choisies parmi les protéines de levures lactiques.

**12** - Procédé selon l'une quelconque des revendications 1 à 8, caractérisé en ce que les protéines d'origine animale autre que laitière sont choisies dans le groupe des gélatines et des protéines de poisson, du sang ou d'oeuf.

**13** - Procédé selon l'une quelconque des revendications 1 à 8, caractérisé en ce que les protéines d'origine végétale sont choisies parmi les protéines de soja, de blé, de feverole et de pois.

**14** - Procédé selon l'une quelconque des revendications précédentes, caractérisé en ce que la proportion de protéine(s) laitière(s) est d'au moins 20%.

**15** - Procédé l'une des revendications 1 à 14, caractérisé en ce que la cuisson-extrusion est réalisée en présence d'un alcali de neutralisation consistant en un sel alcalin, un sel alcalino-terreux ou leur mélange.

**16** - Procédé selon la revendication 15, caractérisé en ce que l'alcali de neutralisation consiste en un mélange de $Na_2CO_3$ et $CaOH_2$.

**17** - Procédé selon la revendication 1, caractérisé en ce que l'on prépare le liant protéique par les étapes suivantes :

a) mélange des composants de départ sous forme de poudre,

b) introduction du mélange dans un cuiseur-extrudeur avec un extrait sec compris entre 75 et 90% éventuellement en présence d'un alcali, la proportion de l'alcali étant comprise entre 1 et 6% et, de préférence, entre 1,5 et 3,5% par rapport au poids du mélange total,

c) passage du mélange dans le cuiseur-extrudeur, la température d'entrée étant de 20 à 25°C, le temps de séjour de 2 à 10 secondes, la pression de $80.10^5$ à $150.10^5$ Pa et la température de sortie de 50 à 300°C, de préférence de 80 à 150°C,

d) post-traitement du mélange à la sortie du cuiseur-extrudeur pour obtenir une granulométrie comprise entre 100 et 200 µm et une humidité résiduelle comprise entre 2 et 8% en poids par rapport au poids total du liant protéique.

**18** - Procédé selon la revendication 17, caractérisé en ce que l'on utilise un cuiseur-extrudeur bi-vis, la vitesse de rotation des vis étant de 200 à 300 t/min.

**19** - Procédé selon la revendication 17, caractérisé en ce que la quantité de l'alcali de neutralisation ajoutée est telle que le pH soit compris entre 6,5 et 9,5 de préférence entre 7,5 à 8,5.

**20** - Procédé selon la revendication 17, caractérisé en ce que la cuisson-extrusion consiste en outre en une décontamination des composants du mélange.

**21** - Procédé de préparation d'un produit alimentaire caractérisé en ce que l'on utilise un liant protéique préparé selon le procédé de l'une quelconque des revendications 1 à 20, à une concentration comprise entre 1 et 10%.

**22** - Procédé selon la revendication 21, caractérisé en ce que l'on prépare un produit alimentaire issu de l'industrie charcutière.

**Office européen des brevets**

# RAPPORT DE RECHERCHE EUROPEENNE

Numero de la demande

EP 91 40 0479

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN vol. 11, no. 349 (C-456)(2796), 14 novembre 1987; & JP - A - 62122560 (FUJI OIL CO. LTD.) 03.06.1987 --- | 1,6,13, 17 | A 23 L 1/05<br>A 23 L 1/0562<br>A 23 L 1/31<br>A 23 J 3/26 |
| X | PATENT ABSTRACTS OF JAPAN vol. 7, no. 43 (C-152)(1188), 19 février 1983; & JP - A - 57194757 (AJINOMOTO K.K.) 30.11.1982 --- | 1,2,6, 13,17, 23 | |
| X | PATENT ABSTRACTS OF JAPAN vol. 10, no. 156 (C-351)(2212), 5 juin 1986; & JP - A - 6112254 (AJINOMOTO K.K.) 20.01.1986 --- | 1,2,6, 12,13 | |
| X | PATENT ABSTRACTS OF JAPAN vol. 13, no. 427 (C-639)(3775), 22 septembre 1989; & JP - A - 1165345 (FUJI OIL CO. LTD.) 29.06.1989 --- | 1,6,13, 17,23 | |
| X | PATENT ABSTRACTS OF JAPAN vol. 6, no. 235 (C-136)(1113), 20 novembre 1982; & JP - A - 57138355 (NIHON SUISAN K.K.) 26.08.1982 --- | 1,6,7,9 ,23 | **DOMAINES TECHNIQUES RECHERCHES (Int. Cl.5)** |
| X | EP-A-0 051 423 (UNILEVER PLC et al.) * page 17, exemples 3-6; revendications 1-13 * --- | 1,4-9, 20 | A 23 L 1/00<br>A 23 J 3/00 |
| X | GB-A-1 511 835 (THE BRITISH PETROLEUM) * revendications 1-11 * --- | 1,3,8, 11,15 | |
| A | GB-A-2 120 518 (GENERAL FOODS CORP.) * abrégé; revendications 1-20 * --- | 1,5-9, 12 | |
| A | EP-A-0 306 773 (MERCK PATENT GMBH) * colonnes 5,6; exemples; revendications 1-5 * ----- | 1,6,12, 15 | |

Le présent rapport a été établi pour toutes les revendications

| Lieu de la recherche | Date d'achèvement de la recherche | Examinateur |
|---|---|---|
| BERLIN | 11-06-1991 | SCHULTZE D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)